# EUROPEAN PATENT SPECIFICATION

(11) **EP 4 273 179 B1**
(45) Date of publication and mention of the grant of the patent: **30.04.2025**
(21) Application number: 22780479.6
(22) Date of filing: 24.03.2022
(51) Int. Cl.: C08F 36/18, C08L 11/00, C08F 2/26

(54) **CHLOROPRENE POLYMER, CHLOROPRENE POLYMER LATEX, METHOD FOR PRODUCING CHLOROPRENE POLYMER LATEX, COMPOUND COMPOSITION AND VALCANIZATION MOLDED BODY**
CHLOROPRENPOLYMER, CHLOROPRENPOLYMERLATEX, VERFAHREN ZUR HERSTELLUNG VON CHLOROPRENPOLYMERLATEX, VERBINDUNGSZUSAMMENSETZUNG UND VALCANISIERUNGSFORMKÖRPER
POLYMÈRE DE CHLOROPRÈNE, LATEX DE POLYMÈRE DE CHLOROPRÈNE AINSI QUE PROCÉDÉ DE FABRICATION DE CELUI-CI, COMPOSITION COMPOSITE, ET CORPS MOULÉ VULCANISÉ

(30) Priority: 31.03.2021 JP 2021060717
(43) Date of publication of application: 08.11.2023
(73) Proprietor: Denka Company Limited, Tokyo 103-8338 (JP)
(72) Inventor: TOMIZAWA, Seiya, Tokyo 103-8338 (JP); NISHINO, Wataru, Tokyo 103-8338 (JP); TADA, Misaki, Tokyo 103-8338 (JP)
(74) Representative: Gulde & Partner
(86) International application number: PCT/JP2022/014017
(87) International publication number: WO 2022/210265

(56) References cited:
- WO-A1-2017/221881
- FR-A1- 2 528 857
- JP-A- 2008 231 404
- JP-A- 2009 191 235
- JP-A- 2013 177 504
- JP-A- 2020 196 785
- JP-A- H08 269 116

## Description

### TECHNICAL FIELD

The present invention relates to a chloroprene-based polymer, a chloroprene-based polymer latex, a method for producing a chloroprene-based polymer latex, a compound composition, and a vulcanized molded body.

### BACKGROUND ART

Since a chloroprene rubber is excellent in heat resistance, weather resistance, ozone resistance, chemical resistance, flame resistance, and the like, and is easy to process, it is widely used as a raw material for industrial rubber parts such as automobile parts, belts, hoses, and vibrationproof rubber. In addition, these products are constantly required to be improved durability and reliability.

For example, WO 2018/110369 A discloses a xanthogen-modified chloroprene rubber, which has 78 to 98.9% by mass of chloroprene units, 1 to 20% by mass of 2,3-dichloro-1,3-butadiene units, 0.1 to 2% by mass of α,β-unsaturated carboxylic acid and a weight average molecular weight of 340,000 to 520,000.

WO 2017/221881 A1, FR 2528857 A, JP H08-269116 A and JP 2009-191235 A disclose the production of chloroprene-based polymer by polymerizing chloroprene monomers in the presence of rosin acid salts and sodium hydroxide.

### SUMMARY OF INVENTION

### TECHNICAL PROBLEM

However, conventional chloroprene-based polymers have a problem that the vulcanized molded body containing the chloroprene-based polymer do not have sufficient dynamic fatigue resistance.

The present invention has been made in view of such circumstances, and a chloroprene-based polymer, a chloroprene-based polymer latex, and a compound composition containing such the chloroprene-based polymer, which can obtain vulcanized molded body with excellent dynamic fatigue resistance, and a vulcanized molded body, and a method for producing these are provided.

### SOLUTION TO PROBLEM

According to the present invention, a chloroprene-based polymer, wherein:
a 1H-NMR spectrum of the chloroprene-based polymer measured in a deuterochloroform solvent has a peak at 5.80 to 6.00 ppm;
when an area of the peak at 5.80 to 6.00 ppm is A and an area of a peak at 4.05 to 6.10 ppm is B, A/B is 1.00/100 to 1.13/100;
the 1H-NMR spectrum of the chloroprene-based polymer measured in the deuterochloroform solvent has a peak at 5.40 to 5.60 ppm; and
when an area of the peak at 5.40 to 5.60 ppm is D and the area of the peak at 4.05 to 6.10 ppm is B, D/B is 97.20/100 or less,
is provided.

The present inventors have made intensive studies and found that in the 1H-NMR spectrum measured in a deuterochloroform solvent, by adjusting a peak area ratio of a peak observed at a specific position within a specific numerical range, a chloroprene-based polymer, which can obtain a vulcanized molded body with excellent dynamic fatigue resistance, can be obtained, and completing the present invention.

Various embodiments of the present invention are illustrated below. The embodiments shown below can be combined with each other.

Preferably, the 1H-NMR spectrum of the chloroprene-based polymer measured in the deuterochloroform solvent has a peak at 4.15 to 4.20 ppm; and
when an area of the peak at 4.15 to 4.20 ppm is C and the area of the peak at 4.05 to 6.10 ppm is B, C/B is 0.10/100 or more.

Preferably, the chloroprene-based polymer is for a vulcanized molded body.

According to another embodiment of the present invention, a chloroprene-based polymer latex comprising the chloroprene-based polymer, wherein:
an amount of substance of alkali metal cation per unit mass in the chloroprene-based polymer latex is 0.05 to 0.10 mmol/g; and
when the chloroprene-based polymer latex is freeze-dried to obtain a solid content containing the chloroprene-based polymer, and an ethanol-toluene azeotropic mixture soluble content specified in JIS K 6229 is extracted by refluxing from the solid content to obtain an extract, and the obtained extract is acid treated with hydrochloric acid, an amount of rosin acid of in the solid content measured by gas chromatography is 1.4 to 2.4 % by mass with respect to 100 % by mass of the chloroprene-based polymer,
   is provided.

In addition, according to another embodiment of the present invention, a method of producing the chloroprene-based polymer latex, wherein
the method comprising an emulsion polymerization step,
   in the emulsion polymerization step, a monomer including chloroprene monomer is emulsified and polymerized,
   1.3 to 1.8 parts by mass of rosin acid salt are used with respect to 100 parts by mass of a total of chloroprene monomer and monomer copolymerizable with chloroprene,
   0.1 to 0.3 parts by mass of a total of sodium hydroxide and potassium hydroxide is used with respect to 100 parts by mass of aqueous medium,
is provided.

According to another embodiment of the present invention, a compound composition comprising the chloroprene-based polymer is provided.

Also, a vulcanized molded body made from the compound composition, is provided.

### EFFECTS OF THE INVENTION

According to the chloroprene-based polymer of the present invention, a vulcanized molded body with excellent dynamic fatigue resistance can be obtained.

### DESCRIPTION OF EMBODIMENTS

Hereinafter, the present invention will be described in detail by exemplifying embodiments of the present invention. The present invention is not limited by these descriptions. Various features of embodiments of the invention described below can be combined with each other. In addition, the invention is established independently for each feature.

### 1. Chloroprene-based Polymer

The chloroprene-based polymer according to the present invention is a homopolymer of 2-chloro-1,3-butadiene (hereinafter referred to as chloroprene), or a copolymer of chloroprene monomer and another monomer copolymerizable with chloroprene.

Examples of the monomer copolymerizable with chloroprene monomer include 2,3-dichloro-1,3-butadiene, 1-chloro-1,3-butadiene, butadiene, isoprene, styrene, acrylonitrile, acrylic acid or esters thereof, methacrylic acid, esters thereof, and the like. These can be used alone, or two or more of these can be used in combination. Although it is not particularly limited, from the viewpoint of maintaining the properties derived from chloroprene, the chloroprene-based polymer according to one embodiment of the present invention preferably has 70% by mass or more, more preferably 80% by mass or more, and even more preferably 90% by mass or more of the monomer units derived from chloroprene with respect to 100% by mass of the chloroprene-based polymer.

A 1H-NMR spectrum of the chloroprene-based polymer according to one embodiment of the present invention measured in a deuterochloroform solvent has a peak at 5.80 to 6.00 ppm. In the chloroprene-based polymer according to one embodiment of the present invention, when an area of the peak at 5.80 to 6.00 ppm is A and an area of a peak at 4.05 to 6.10 ppm is B, A/B is 1.00/100 to 1.13/100. A/B is, for example, 1.00, 1.01, 1.02, 1.03, 1.04, 1.05, 1.06, 1.07, 1.08, 1.09, 1.10, 1.11, 1.12, 1.13/100, and may be in the range between the two values exemplified herein.

The chloroprene-based polymer is purified with benzene and methanol and freeze-dried to obtain a sample and the sample is dissolved in deuterochloroform. 1H-NMR spectrum is measured for a liquid dissolved in deuterochloroform. A peak position is based on the peak of chloroform in deuterochloroform (7.24 ppm).

The peak appearing at 5.80 to 6.00 ppm in the 1H-NMR spectrum is presumed to be related to a structure represented by the following formula (1).

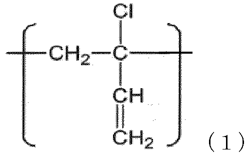

It is presumed that the chloroprene-based polymer according to one embodiment of the present invention can obtain a vulcanized molded body with excellent dynamic fatigue resistance by adjusting A/B equal to or less than the above upper limit and appropriately controlling the amount of structures that can become cross-linking points.

The 1H-NMR spectrum of the chloroprene-based polymer according to one embodiment of the present invention measured in a deuterochloroform solvent has a peak at 5.40 to 5.60 ppm. In the chloroprene-based polymer according to one embodiment of the present invention, when an area of the peak at 5.40 to 5.60 ppm is D and the area of the peak at 4.05 to 6.10 ppm is B, D/B is 97.20/100 or less, preferably 97.18/100 or less, and more preferably 97.15/100 or less.

D/B may be, for example, 97.00, 97.01, 97.02, 97.03, 97.04, 97.05, 97.06, 97.07, 97.08, 97.09, 97.10, 97.11, 97.12, 97.13, 97.14, 97.15, 97.16, 97.17, 97.18, 97.19, 9 7.20/100, and may be in the range between the two values exemplified herein.

Also, the peak appearing at 5.40 to 5.60 ppm in the 1H-NMR spectrum is presumed to be related to a structure represented by the following formula (2).

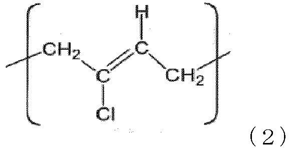

By adjusting D/B equal to or less than the above upper limit, it is possible to maintain the rubber properties of the obtained vulcanized molded body, and in particular to prevent the rubber from becoming too hard.

Conventionally, for example, by adjusting the temperature during polymerization of the chloroprene-based polymer or by heat-treating the chloroprene-based polymer, it has been attempted to adjust the microstructure content of the chloroprene-based polymer. However, in conventional methods such as heat treatment of a chloroprene-based polymer, when the amount of the structure represented by formula (1) corresponding to A/B that can be a cross-linking point is reduced, at the same time, the amount of the structure represented by formula (2) corresponding to D/B is increased. Thus, it has been difficult to highly adjust the microstructure content of the chloroprene-based polymer, especially to reduce the amount of the structure represented by formula (1) corresponding to A/B, which can be a cross-linking point, while controlling the increase in the amount of the structure represented by formula (2) corresponding to D/B. However, according to the present invention, by highly adjusting the producing conditions of the chloroprene-based polymer, especially the charged amount of rosin acid salt, and sodium hydroxide and potassium hydroxide during the polymerization of chloroprene-based polymer, the amount of the structure represented by formula (1) corresponding to A/B , which can become a cross-linking point, can be reduced without increasing the amount of the structure represented by formula (2) corresponding to D/B and the chloroprene-based polymer, which can obtain a vulcanized molded body with excellent dynamic fatigue endurance, may be obtained.

The 1H-NMR spectrum of the chloroprene-based polymer according to one embodiment of the present invention measured in a deuterochloroform solvent has a peak at 4.15 to 4.20 ppm. In the chloroprene-based polymer according to one embodiment of the present invention, when an area of the peak at 4.15 to 4.20 ppm is C and the area of the peak at 4.05 to 6.10 ppm is B, C/B is preferably 0.10/100 or more. The upper limit is not particularly defined, it is, for example, 1.000/100 or less.

C/B may be, for example, 0.10, 0.20, 0.30, 0.40, 0.50, 0.60, 0.70, 0.80, 0.90, 1.00, and may be in the range between the two values exemplified herein.

The peak appearing at 4.15 to 4.20 ppm in the 1H-NMR spectrum is presumed to be related to 1,2-OH rearrangement structure represented by the following formula (3).

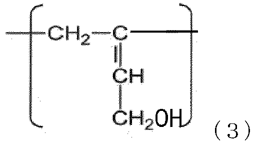

According to one embodiment of the present invention, by highly adjusting the producing conditions of the chloroprene-based polymer, especially the charged amount of rosin acid salt, and sodium hydroxide and potassium hydroxide during the polymerization of chloroprene-based polymer, the amount of the structure represented by formula (1) corresponding to A/B, which can become a cross-linking point, can be reduced without increasing the amount of the structure represented by formula (2) corresponding to D/B. In this case, the structure represented by formula (3) corresponding to C/B may increase compared to conventional the chloroprene-based polymer. It is presumed that the chloroprene-based polymer according to one embodiment of the present invention has D/B, A/B, and C/B within the above numerical ranges so that the chloroprene-based polymer can obtain a vulcanized molded body with more excellent dynamic fatigue resistance. The chloroprene-based polymer according to one embodiment of the present invention is preferably for a vulcanized molded body.

### 2. Chloroprene-based Polymer Latex

The chloroprene-based polymer latex of the present invention contains the chloroprene-based polymer described above, and the amount of substance of alkali metal cation in the chloroprene-based polymer latex and the amount of rosin acid contained in the chloroprene-based polymer are preferably within a specific numerical range.

### 2.1 Alkali Metal Cation

In the chloroprene-based polymer latex according to the present invention, the amount of substance of alkali metal cation per unit in the chloroprene-based polymer latex is preferably 0.05 to 0.10 mmol/g. The amount of substance of alkali metal cation can be, for example, 0.05, 0.06, 0.07, 0.08, 0.09, 0.10 mmol/g, and may be in the range between the two values exemplified herein.

The amount of substance of alkali metal cation in the chloroprene-based polymer latex is analyzed by an inductively coupled plasma atomic emission spectrometer after the chloroprene-based polymer latex is acid-decomposed with sulfuric acid, nitric acid and the like, and acidified with hydrochloric acid. Specifically, it can be determined by the method described in Examples.

The alkali metal cation in one embodiment of the invention is preferably potassium and sodium ion.

### 2.2 Rosin Acid

When the chloroprene-based polymer latex according to the present invention is freeze-dried to obtain a solid content containing the chloroprene-based polymer, and an ethanol-toluene azeotropic mixture soluble content specified in JIS K 6229 is extracted by refluxing from the solid content to obtain an extract, and the obtained extract is acid treated with hydrochloric acid, an amount of rosin acid of in the solid content measured by gas chromatography is preferably 1.4 to 2.4 % by mass with respect to 100% by mass of the chloroprene-based polymer. The amount of rosin acid in the solid content containing chloroprene-based polymer can be, for example, 1.4, 1.5, 1.6, 1.7, 1.8, 1.9, 2.0, 2.1, 2.2, 2.3, 2.4 % by mass, and may be in the range between the two values exemplified herein.

The amount of rosin acid in the solid content containing the chloroprene-based polymer is obtained by freeze-drying the chloroprene-based polymer latex to obtain a solid content containing the chloroprene-based polymer, extracting rosin acids from the solid content with an ethanol-toluene azeotropic mixture (ethanol/toluene volume ratio 7/3 (ETA)) and measuring by gas chromatography. Specifically, it can be determined by the method described in Examples.

Examples of the rosin acid according to one embodiment of the present invention include a single component or a mixture of resin acids such as abietic acid, dehydroabietic acid, dihydroabietic acid, pimaric acid, dihydropimaric acid, isopimaric acid, secodehydroabietic acid, and the like.

The chloroprene-based polymer latex according to the present invention can obtain a vulcanized molded body having more excellent dynamic durability fatigue resistance by setting the amount of alkali metal cation and the amount of rosin acid within the above-mentioned specific numerical ranges.

In addition, the chloroprene-based polymer latex according to one embodiment of the present invention may contain a freeze stabilizer, an emulsion stabilizer, a viscosity modifier, an antioxidant, a preservative, and the like within a range that does not impair the effects of the present invention.

In the chloroprene-based polymer latex according to one embodiment of the present invention, when the chloroprene-based polymer contained in the chloroprene-based polymer latex is 100% by mass, the content of the emulsifier other than the emulsifier containing rosin acid may be 1% by mass or less and 0.5% by mass or less. Examples of emulsifiers other than the emulsifier containing rosin acid include metal salts of aromatic sulfonic acid formalin condensate, sodium dodecylbenzenesulfonate, potassium dodecylbenzenesulfonate, sodium alkyldiphenylethersulfonate, potassium alkyldiphenylethersulfonate, sodium poly oxyethylene alkyl ether sulfonate, sodium polyoxypropylene alkyl ether sulfonate, potassium polyoxyethylene alkyl ether sulfonate, potassium polyoxypropylene alkyl ether sulfonate and the like. In the chloroprene-based polymer latex according to one embodiment of the present invention, the content of the metal salt of the aromatic sulfonic acid formalin condensate, for example, the content of the naphthalene sulfonic acid formalin condensate can be 1% by mass or less and 0.5% by mass or less.

### 3. Method for Producing Chloroprene-based Polymer Latex

The method for producing the chloroprene-based polymer latex according to the present invention is not particularly limited. It can be obtained by a method of producing including an emulsion polymerization step in which a monomer including chloroprene monomer is emulsified and polymerized. In the emulsion polymerization step according to one embodiment of the present invention, chloroprene monomer, or chloroprene monomer and other monomer copolymerizable with chloroprene monomer are emulsified and polymerized by using an emulsifiers, an dispersing agent, a catalyst, a chain transfer agent, and the like as appropriate, and when the desired polymerization rate is reached, a polymerization terminator may be added to obtain the chloroprene-based polymer latex. Unreacted monomer can be removed from the chloroprene-based polymer latex obtained in this way by steam flash method, concentration method, and the like.

### <Monomer>

The monomer containing chloroprene monomer include chloroprene monomer and other monomers copolymerizable with chloroprene monomer described above.

### <Rosin Acid Salt>

In the emulsion polymerization step of one embodiment of the present invention, it is preferable to use 1.3 to 1.8 parts by mass of rosin acid salt with respect to 100 parts by mass of the total of chloroprene monomer and monomer copolymerizable with chloroprene.

The amount of rosin acid salt used can be, for example, 1.3, 1.4, 1.5, 1.6, 1.7, 1.8 parts by mass, and may be in the range between the two values exemplified herein.

Examples of the rosin acid salt include, for example, alkali metal salts such as sodium and potassium, alkaline earth metal salts such as calcium, and ammonium salts. Preferably, sodium and potassium salts may be used from the viewpoint of ease of handling, and the like. Examples of the rosin acid included in the rosin salt include the rosin acid exemplified above.

In the emulsion polymerization step of one embodiment of the present invention, rosin acid may be used in combination. When rosin acid is used, the amount of rosin acid used may be, for example, 0.1, 0.2, 0.3, 0.4, 0.5 parts by mass, and may be in the range between the two values exemplified herein.

### <Other Emulsifier and Dispersant>

In the method of producing according to one embodiment of the present invention, other emulsifiers may be used together, if necessary, for the purpose of stabilizing the control of the polymerization reaction, and the like. Examples of the other emulsifier and dispersant include, for example, the compounds listed above as the emulsifier other than emulsifier containing rosin acid. In the method of producing for one embodiment of the present invention, the amount of the emulsifier other than the emulsifier containing rosin acid can be 1 parts or less by mass, and 0.5 parts or less with respect to 100 parts by mass of the total of chloroprene monomer and monomer copolymerizable with chloroprene.

### <Potassium Hydroxide and Sodium Hydroxide>

In the emulsion polymerization step of one embodiment of the present invention, 0.1 to 0.3 parts by mass of a total of sodium hydroxide and potassium hydroxide is preferably used with respect to 100 parts by mass of aqueous medium, and more preferably 0.1 parts by mass or more and less than 0.5 parts by mass of a total of sodium hydroxide and potassium hydroxide is used.

The total amount of sodium hydroxide and potassium hydroxide can be, for example, 0.1, 0.2, 0.3 parts by mass, and may be in the range between the two values exemplified herein.

As the aqueous medium, especially pure water is preferred.

### <Polymerization Initiator>

Examples of the polymerization initiator used can include potassium persulfate, benzoyl peroxide, ammonium persulfate, hydrogen peroxide, and the like, which can be used in ordinary radical polymerization.

### <Chain Transfer Agent>

Examples of the chain transfer agent used can include known chain transfer agents, for example, long-chain alkyl mercaptans such as n-dodecyl mercaptan, tert-dodecyl mercaptan, n-octyl mercaptan, dialkyl xanthogen disulfides such as diisopropyl xanthogen disulfide and diethyl xanthogen disulfide, and iodoform.

### <Polymerization Temperature>

The polymerization temperature is preferably in the range of 0 to 55°C from the viewpoint of easy control of reaction. From the viewpoint of smoother and safer polymerization reaction, it is desirable to set the lower limit and upper limit of the polymerization temperature to 10°C or higher and 45°C or lower, respectively.

### <Polymerization Conversion Rate>

The polymerization conversion ratio can be in the range of 60 to 95%. The polymerization reaction can be stopped by adding a polymerization terminator. By setting the polymerization conversion rate within the above numerical range, gel formation can be suppressed.

### <Polymerization Terminator>

Examples of the polymerization terminator include thiodiphenylamine, 4-tert-butyl catechol, 2,2'-methylenebis-4-methyl-6-tert-butylphenol, and the like. Unreacted monomer after emulsion polymerization can be removed by conventional methods such as vacuum distillation.

The method of producing the chloroprene-based polymer latex according to one embodiment of the present invention preferably does not include the step of heating at 140°C or higher for 1 hour or longer, and more preferably does not include the step of heating at 140°C or higher. Further, the method for producing the chloroprene-based polymer latex according to one embodiment of the present invention preferably does not include the step of heating at 55°C or higher for 3 hours or longer and does not include the step of heating at 55°C or higher for 1 hour or longer.

According to the method of producing according to one embodiment of the present invention, by adjusting the production conditions of the chloroprene-based polymer, for example, the charged amounts of rosin acid salt and sodium hydroxide and potassium hydroxide during polymerization of the chloroprene-based polymer, the microstructure of the chloroprene-based polymer can be more highly controlled even without the heating step, or even if the temperature of the heating step is lower or the time of the heating step is shorter than those of conventional method and a chloroprene-based polymer that can obtain a vulcanized molded body with more excellent dynamic fatigue resistance than conventional ones can be obtained.

### 4. Method of Producing Chloroprene-based Polymer

The chloroprene-based polymer of the present invention can be obtained by drying up of the chloroprene-based polymer latex described above. Drying up may be performed by known methods.

### 5. Compound Composition and Vulcanized Molded Body

A compound composition of the present invention includes the above-mentioned chloroprene-based polymer latex or chloroprene-based polymer. A vulcanized molded body according to the present invention is made by vulcanizing the compound composition described above.

In addition to the chloroprene-based polymer latex or chloroprene-based polymer described above, the compound composition of one embodiment of the present invention can include, for example, a vulcanizing agent, a vulcanization accelerator, fillers or a reinforcing agent, a plasticizer, a processing aid and a lubricant, an antioxidant, a silane coupling agent and the like.

### <Vulcanizing Agent>

The type of vulcanizing agent is not limited as long as it does not impair the effects of the present invention, and one or more of usual vulcanizing agents that can be used for chloroprene rubber may be freely selected. Examples of the vulcanizing agent include zinc oxide, magnesium oxide, lead oxide, trilead tetroxide, iron trioxide, titanium dioxide, calcium oxide, and hydrotalcite. The amount of the vulcanizing agent is also not limited. The compound composition of one embodiment of the present invention may have 3 to 15 parts by mass of the vulcanizing agent with respect to 100 parts by mass of the chloroprene-based polymer. When the added amount is within this range, processing safety is ensured and a good vulcanized molded body can be obtained.

### <Vulcanization Accelerator>

The compound composition according to one embodiment of the present invention can be further effectively vulcanized by using a vulcanization accelerator in combination with the vulcanization agent described above. The type of vulcanization accelerator that can be blended into the compound composition according to the present invention is not particularly limited as long as the effect of the present invention is not impaired, and one or more types of vulcanization accelerators commonly used for vulcanizing chloroprene rubber can be freely selected and used. Examples of the vulcanization accelerator include thiuram-based, dithiocarbamate-based, thiourea-based, guanidine-based, xanthogenate-based, thiazole-based, and the like, and these may be used alone, or two or more of these may be used in combination as necessary. Examples of the thiuram-based vulcanization accelerator include tetramethylthiuram disulfide, tetraethylthiuram disulfide, tetrabutylthiuram disulfide, tetrakis(2-ethylhexyl)thiuram disulfide, tetramethylthiuram monosulfide, and dipentamethylenethiuram tetrasulfide.

Examples of the dithiocarbamate-based vulcanization accelerator include sodium dibutyldithiocarbamate, zinc dimethyldithiocarbamate, zinc diethyldithiocarbamate, zinc n-ethyl-n-phenyldithiocarbamate, zinc n-pentamethylenedithiocarbamate, copper dimethyldithiocarbamate, ferric dimethyldithiocarbamate, tellurium diethyldithiocarbamate, and the like. In particular, zinc dibutyldithiocarbamate is preferably used.

Examples of the thiourea-based vulcanization accelerator include ethylene thiourea, N,N'-diethylthiourea, trimethylthiourea, and N,N'-diphenylthiourea.

Examples of the guanidine-based vulcanization accelerator include 1,3-diphenylguanidine, 1,3-di-o-tolylguanidine, 1-o-tolylbiguanide, di-o-tolylguanidine salt of dicatechol borate and the like.

Examples of the xanthate-based vulcanization accelerator include zinc butylxanthate, zinc isopropyl xanthate.

Examples of the thiazole-based vulcanization accelerator include 2-mercaptobenzothiazole, di-2-benzothiazolyl disulfide, 2-mercaptobenzothiazole zinc salt, cyclohexylamine salt of 2-mercaptobenzothiazole, 2-(4'-morpholinodithio)benzothiazole and the like.

In the compound composition according to one embodiment of the present invention, the amount of the vulcanization accelerator added is preferably 0.5 to 5 parts by mass with respect to 100 parts by mass of the chloroprene-based polymer.

### <Fillers or Reinforcing Agent>

Fillers or a reinforcing agent may be added to adjust the hardness of rubber and improve mechanical strength. Examples of them are not limited and include carbon black, silica, clay, talc, and calcium carbonate. These fillers may be used alone, or two or more of these may be used in combination.

The amount of these fillers and reinforcing agent may be adjusted according to the properties required for the rubber composition and the cross-linked or vulcanized rubber obtained from the rubber composition, and is not particularly limited. Normally 15 to 200 parts by mass in total of these may be added k with respect to 100 parts by mass of the chloroprene-based polymer in the compound composition of the present embodiment.

### <Antioxidant>

A primary antioxidant is added mainly to suppress the decrease in hardness, elongation at break, and the like and to improve heat resistance when the obtained vulcanized molded body is heated. Examples include phenolic antioxidant, amine antioxidants, acrylate antioxidants, metal carbamates and waxes. These primary antioxidants may be used alone, or two or more of these may be used in combination. Among these compounds, amine antioxidant such as 4,4'-bis(α,α-dimethylbenzyl)diphenylamine, octylated diphenylamine, N-phenyl-N'-(1,3-dimethylbutyl)-p-phenylenediamine are preferred because they are effective in improving heat resistance.

The amount of primary antioxidant may be 0.1 to 10 parts by mass, preferably 1 to 5 parts by mass, with respect to 100 parts by mass of the chloroprene-based polymer contained in the compound composition. By setting the amount of the primary antioxidant in this range, the decrease in hardness, elongation at break, and the like of the resulting vulcanized molded body or compound can be suppressed and heat resistance can be improved.

The secondary antioxidant is added mainly to suppress the decrease in hardness, elongation at break, and compression set and the like and to improve heat resistance when the obtained vulcanized molded body is heated. Phosphorus-based antioxidants, sulfur-based antioxidants, and imidazole-based antioxidants can be mentioned. These secondary antioxidants may be used alone, or two or more of these may be used in combination. Among these compounds, the phosphorus-based antioxidant such as tris(nonylphenyl)phosphite and tris(2,4-di-t-butylphenyl)phosphite, the sulfur-based antioxidants such as dilarium thiodiopropionate, dimistyl-3,3'-thiodipropionate, and distearyl-3,3'-thiodipropionate, and the imidazole-based antioxidants such as 2-mercaptobenzimidazole and 1-benzyl-2-ethylimidazole are preferable because it has a large effect of improving heat resistance.

The amount of secondary aging antioxidant is 0.1 to 10 parts by mass, preferably 0.5 to 5 parts by mass, with respect to 100 parts by mass of the chloroprene-based polymer in the compound composition. By setting the amount of secondary antioxidant in this range, heat resistance can be improved.

### <Plasticizer>

The compound composition according to one embodiment of the present invention can contain a plasticizer. The plasticizer is not particularly limited as long as it is compatible with the chloroprene-based polymer. Examples include vegetable oils such as rapeseed oil, phthalate-based plasticizers, DUP (diundecyl phthalate), DOS (dioctyl sebacate), DOA (dioctyl adipate), ester plasticizers, ether ester plasticizers, thioether plasticizers, aromatic oils, naphthenic oils and the like. These may be used alone, or two or more of these may be used in combination. The amount of plasticizer blended may preferably 5 to 50 parts by mass with respect to 100 parts by mass of the chloroprene-based polymer.

### <Processing Aid>

The compound composition according to one embodiment of the present invention can contain a processing aid. The processing aid is mainly added to improve processing characteristics, such as to make the compound composition easier to peel off from rolls, molds, extruder screws, and the like. Examples of the processing aid include fatty acids such as stearic acid or paraffinic processing aids such as polyethylene. Processing aids include fatty acids such as stearic acid and paraffinic processing aids such as polyethylene. It is preferable to add 0.1 to 5 parts by mass to 100 parts by mass of the chloroprene-based polymer.

### <Method of Producing Compound Composition>

The compound composition according to one embodiment of the present invention is obtained by kneading the chloroprene-based polymer or chloroprene-based polymer latex and other required components at a temperature below the vulcanization temperature. As device for kneading the raw material components, a conventionally known mixer, banbury mixer, kneader mixer, open roll, and other kneading device can be used.

### <Vulcanized Molded Body>

The vulcanized molded body according to one embodiment of the present invention is a vulcanized molded body obtained by vulcanizing the above compound composition. The above compound composition may be molded into various desired shapes and then vulcanized, or the compound composition may be made into vulcanized rubber in advance and then molded into various shapes. Conventional methods of molding the compound composition and vulcanized rubber include conventional press molding, extrusion molding, and calender molding. The methods used in the normal rubber industry may be employed.

The vulcanized molded body according to one embodiment of the present invention preferably does not crack even after 1.6 million times bending test, more preferably does not crack even after 1.8 million times bending test, and even more preferably does not crack even after 2 million times bending test in De Mattia bending fatigue test based on JIS K 6260. The bending test can be performed by the method described in Examples.

The method of vulcanizing the compound composition is not particularly limited. A vulcanized rubber can be obtained by general steam vulcanization or UHF vulcanization. Steam vulcanization is a means of vulcanizing an unvulcanized compound composition by applying pressure and temperature with steam gas as a heating medium, and UHF vulcanization is a method of vulcanizing the compound composition by irradiating it with microwaves. Further, during press vulcanization or injection molding, the compound composition may be vulcanized by raising the mold temperature to the vulcanization temperature while holding the compound composition inside the mold. The vulcanization temperature can be appropriately set according to the formulation of the compound composition and the type of the vulcanizing agent. Generally, 140 to 220°C is preferred, and a range of 150 to 180°C is more preferred. Vulcanization time can be, for example, 10 to 30 minutes. The vulcanized rubber is particularly suitable for use in compounds, belts, parts for overhead vehicles, seismic isolation rubber, hoses, wipers, immersion products, sealing parts, boots, rubber-coated fabrics, rubber rolls or sponge products.

### EXAMPLES

The invention is described in more detail below based on Examples, but the invention is not to be construed as limited thereto.

### (Example 1)

To a reactor with an internal volume of 5 liters, 0.2 parts of n-dodecylmercaptan and 1.6 parts by mass of potassium rosin acid (disproportionated tall rosin potassium salt, manufactured by Harima Chemicals Group, Inc.), 0.2 parts by mass of sodium hydroxide, 0.4 parts by mass of sodium salt of formaldehyde-naphthalenesulfonic acid condensate and 100 parts by mass of pure water were added with respect to 100 parts by mass of chloroprene monomer. 0.05 part by mass of potassium persulfate was added as a polymerization initiator, and polymerization was carried out at a polymerization temperature of 35°C under a nitrogen stream. When the polymerization conversion reached 65% or more, 0.01 part by mass of thiodiphenylamine was added as a polymerization terminator to terminate the reaction. Unreacted monomers were removed under reduced pressure to obtain a chloroprene-based polymer latex having a solid content of 40%.

### (Examples 2 to 3 (not forming part of the invention), Comparative Examples 1 to 3)

Each of the chloroprene-based polymer latex was obtained by the method described in the Examples 1, except that the charged amount of rosin acid and the total amount of sodium hydroxide and potassium hydroxide were as described in Table 1.

### <Rosin Acid Content in Solid Containing Chloroprene-Based Polymer>

3 g of solid content, which was obtained by freeze-drying the chloroprene-based polymer latex and contained the chloroprene-based polymer, was cut into 2 mm squares, placed in an eggplant flask equipped with a condenser, and rosin acids were extracted with an ethanol-toluene azeotrope mixture (ethanol/toluene volume ratio: 7/3 (ETA)) and measured by gas chromatography. The rosin acids content was determined from the peak area of the rosin component. The results are shown in Table 1.

Gas chromatography was performed under the following measurement conditions.
Column used: FFAP 0.32 mmφ x 25 m (thickness 0.3 µm)
Column temperature: 200°C → 250°C
Temperature increase rate: 10°C/min
Inlet temperature: 270°C
Detector temperature: 270°C
Injection volume: 2 µL

### < Amount of Substance of Alkali Metal Cation in Chloroprene-Based Polymer Latex>

1.0 g of the obtained chloroprene-based polymer latex was acid-decomposed with s sulfuric acid and nitric acid and acidified with hydrochloric acid. Potassium ions and sodium ions were quantified using an inductively coupled plasma atomic emission spectrometer (ICP-AES: VISTA-PRO) manufactured by Hitachi High-Tech Science Corporation. Table 1 shows the results.

### <Measurement of Nuclear Magnetic Resonance Analysis (1H-NMR) Spectrum of Chloroprene-Based Polymer>

The chloroprene-based polymer latex was purified with benzene and methanol, freeze-dried, and dissolved in a 5% deuterochloroform solvent, and a 1H- NMR spectrum was measured with JNM-ECX-400 (400 MHz, FT type) manufactured by JEOL Ltd. In the obtained 1H-NMR spectrum, the peak area A at a position of 5.80 to 6.00 ppm, the peak area B at a position of 4.05 to 6.10 ppm, peak area C at a position of 4.15 to 4.20 ppm and a peak area D at a position of 5.40 to 5.60 ppm based on the peak of chloroform in deuterochloroform (7.24 ppm) were measured, and A/B, C/B and D/B were calculated. Table 1 shows the results.

Measurement conditions for nuclear magnetic resonance spectroscopy (1H-NMR) are shown below.
Measurement mode: non-decoupling
Flip angle: 45 degrees
Waiting time: 4.3 seconds
Sample rotation speed: 0 to 12 Hz
Window processing: Exponential function
Accumulation count: 512
Measurement temperature: 30°C

### <Preparing of Compound Composition and Vulcanized Molded Body>

The chloroprene-based polymer latex obtained by drying up the above-mentioned chloroprene-based polymer latex in the usual way and the other components were measured and taken out in the formulation shown in Table 1, mixed using an 8-inch roll, and pressed cross-linked at 160°C for 20 minutes to produce a vulcanized molded body with a thickness of 2 mm.

### <De Mattia bending fatigue test>

The resulting vulcanized molded body was subjected to a bending test under the conditions of a stroke of 58 mm and a speed of 300±10 rpm based on De Mattia bending fatigue test of JIS K 6260. The number of bending tests (unit: 10,000 times) at the time when cracks occurred was confirmed to evaluate fatigue resistance.

### [Table 1]

**Tabb 1**

| | | Unit | Example 1 | Example 2 | Example 3 | Comparative Example 1 | Com parative Example 2 | Comparative Example 3 |
|---|---|---|---|---|---|---|---|---|
| Charged Amount at the time of producing | Amount of rosin acid sat with respect to 100 parts by mass of m onom er | Parts by mass | 1.6 | 2.0 | 1.8 | 3.5 | 2.0 | 2.5 |
| | Total amount of Na0H and K0H with respect to 100 parts by mass of water | Parts by mass | 0.2 | 0.2 | 0.4 | 0.2 | 0.6 | 0.2 |
| Properties of latex | Amount of rosin acid with respect to chbroprene-based polymer in latex | % by mass | 1.7 | 2.8 | 2.4 | 5.3 | 2.9 | 3.8 |
| | Amount of akalimetal cation in latex | mmol/g | 0.08 | 0.09 | 0.11 | 0.10 | 0.15 | 0.10 |
| Properties of polymer | NMR peak area (A/B) | % | 1.05 | 1.14 | 1.18 | 1.30 | 1.28 | 1.26 |
| | NMR peak area (C/B) | % | 0.28 | 0.18 | 0.12 | 002 | 0.04 | 0.06 |
| | NMR peak area (D/B) | % | 97.15 | 97.14 | 97.10 | 97.10 | 97.12 | 97.09 |
| Formulation in rubber | Chbroprene-based polymer | Parts by mass | 100 | 100 | 100 | 100 | 100 | 100 |
| | N-phenyl 1-naphthylamine | Parts by mass | 1 | 1 | 1 | 1 | 1 | 1 |
| | Magnesium oxide | Parts by mass | 4 | 4 | 4 | 4 | 4 | 4 |
| | Carbon black | Parts by mass | 30 | 30 | 30 | 30 | 30 | 30 |
| | Dioctyl sebacate | Parts by mass | 5 | 5 | 5 | 5 | 5 | 5 |
| | Zinc oxide | Parts by mass | 5 | 5 | 5 | 5 | 5 | 5 |
| | Ethylene thiourea | Parts by mass | 1 | 1 | 1 | 1 | 1 | 1 |
| | Tetramethyl thiuram disulfide | Parts by mass | 0.5 | 0.5 | 0.5 | 0.5 | 0.5 | 0.5 |
| Rubber properties | Bending test at 25°C (number of bends that crack occured) | 10,000 times | 280 | 230 | 210 | 100 | 120 | 150 |

## Claims

1. A chloroprene-based polymer, wherein:
when the chloroprene-based polymer is dissolved in a 5% deuterochloroform solvent and a 1H-NMR spectrum is measured by nuclear magnetic resonance analysis according to the description,
the 1H-NMR spectrum of the chloroprene-based polymer measured in a deuterochloroform solvent has a peak at 5.80 to 6.00 ppm;
when an area of the peak at 5.80 to 6.00 ppm is A and an area of a peak at 4.05 to 6.10 ppm is B, A/B is 1.00/100 to 1.13/100;
the 1H-NMR spectrum of the chloroprene-based polymer measured in a deuterochloroform solvent has a peak at 5.40 to 5.60 ppm; and
when an area of the peak at 5.40 to 5.60 ppm is D and the area of the peak at 4.05 to 6.10 ppm is B, D/B is 97.20/100 or less.

2. The chloroprene-based polymer of Claim 1, wherein
the 1H-NMR spectrum of the chloroprene-based polymer measured in the deuterochloroform solvent has a peak at 4.15 to 4.20 ppm; and
when an area of the peak at 4.15 to 4.20 ppm is C and the area of the peak at 4.05 to 6.10 ppm is B, C/B is 0.10/100 or more.

3. The chloroprene-based polymer of Claim 1 or 2, which is for a vulcanized molded body.

4. A chloroprene-based polymer latex comprising the chloroprene-based polymer of any one of Claims 1 to 3, wherein:
an amount of substance of alkali metal cation per unit mass in the chloroprene-based polymer latex is 0.05 to 0.10 mmol/g; and
when the chloroprene-based polymer latex is freeze-dried to obtain a solid content containing the chloroprene-based polymer, and an ethanol-toluene azeotropic mixture soluble content specified in JIS K 6229 is extracted by refluxing from the solid content to obtain an extract, and the obtained extract is acid treated with hydrochloric acid, an amount of rosin acid of in the solid content measured by gas chromatography is 1.4 to 2.4 % by mass with respect to 100 % by mass of the chloroprene-based polymer.

5. A method of producing the chloroprene-based polymer latex of Claim 4, wherein
the method comprising an emulsion polymerization step,
in the emulsion polymerization step, a monomer including chloroprene monomer is emulsified and polymerized,
1.3 to 1.8 parts by mass of rosin acid salt are used with respect to 100 parts by mass of a total of chloroprene monomer and monomer copolymerizable with chloroprene, and
0.1 to 0.3 parts by mass of a total of sodium hydroxide and potassium hydroxide is used with respect to 100 parts by mass of aqueous medium.

6. A compound composition comprising the chloroprene-based polymer of any one of Claims 1 to 3.

7. A vulcanized molded body made from the compound composition of Claim 6.

## Patentansprüche

1. Chloroprenbasiertes Polymer, wobei:
wenn das chloroprenbasierte Polymer in einem 5%igen Deuterochloroform-Lösungsmittel gelöst wird und mittels Nuklearmagnetresonanzanalyse gemäß der Beschreibung ein 1H-NMR-Spektrum gemessen wird,
das 1H-NMR-Spektrum des chloroprenbasierten Polymers, gemessen in einem Deuterochloroform-Lösungsmittel, einen Peak bei 5,80 bis 6,00 ppm aufweist;
wenn eine Fläche des Peaks bei 5,80 bis 6,00 ppm A ist und eine Fläche eines Peaks bei 4,05 bis 6,10 ppm B ist, A/B 1,00/100 bis 1,13/100 beträgt;
das 1H-NMR-Spektrum des chloroprenbasierten Polymers, gemessen in einem Deuterochloroform-Lösungsmittel, einen Peak bei 5,40 bis 5,60 ppm aufweist; und
wenn eine Fläche des Peaks bei 5,40 bis 5,60 ppm D ist und die Fläche des Peaks bei 4,05 bis 6,10 ppm B ist, D/B 97,20/100 oder kleiner ist.

2. Chloroprenbasiertes Polymer nach Anspruch 1, wobei
das 1H-NMR-Spektrum des chloroprenbasierten Polymers, gemessen in dem Deuterochloroform-Lösungsmittel, einen Peak bei 4,15 bis 4,20 ppm aufweist; und
wenn eine Fläche des Peaks bei 4,15 bis 4,20 ppm C ist und die Fläche des Peaks bei 4,05 bis 6,10 ppm B ist, C/B 0,10/100 oder größer ist.

3. Chloroprenbasiertes Polymer nach Anspruch 1 oder 2, das für einen vulkanisierten Formkörper dient.

4. Chloroprenbasiertes Polymerlatex, welches das chloroprenbasierte Polymer nach einem der Ansprüche 1 bis 3 umfasst, wobei:
eine Substanzmenge an Alkalimetall-Kation pro Masseneinheit in dem chloroprenbasierten Polymerlatex 0,05 bis 0,10 mmol/g beträgt; und
wenn das chloroprenbasierte Polymerlatex gefriergetrocknet wird, um einen Feststoffgehalt zu erhalten, der das chloroprenbasierte Polymer enthält, und ein in einem azeotropen Ethanol-Toluol-Gemisch löslicher Gehalt, spezifiziert in JIS K 6229, durch Erhitzen unter Rückfluss aus dem Feststoffgehalt extrahiert wird, um einen Extrakt zu erhalten, und der erhaltene Extrakt mit Chlorwasserstoffsäure säurebehandelt wird, eine Menge an Harzsäure in dem Feststoffgehalt, gemessen mittels Gaschromatographie, 1,4 bis 2,4 Masse% bezogen auf 100 Masse% des chloroprenbasierten Polymers beträgt

5. Verfahren zur Herstellung des chloroprenbasierten Polymerlatex nach Anspruch 4, wobei
das Verfahren einen Emulsionspolymerisationsschritt umfasst,
in dem Emulsionspolymerisationsschritt ein Monomer, das Chloroprenmonomer umfasst, emulgiert und polymerisiert wird,
1,3 bis 1,8 Masseteile an Harzsäuresalz bezogen auf 100 Masseteile einer Gesamtheit an Chloroprenmonomer und Monomer, das mit Chloropren polymierisierbar ist, verwendet werden und
0,1 bis 0,3 Masseteile einer Gesamtheit an Natriumhydroxid und Kaliumhydroxid bezogen auf 100 Masseteile an wässrigem Medium verwendet werden.

6. Verbindungszusammensetzung, die das chloroprenbasierte Polymer nach einem der Ansprüche 1 bis 3 umfasst.

7. Vulkanisierter Formkörper, der aus der Verbindungszusammensetzung nach Anspruch 6 hergestellt ist.

## Revendications

1. Polymère à base de chloroprène, dans lequel :
lorsque le polymère à base de chloroprène est dissous dans un solvant deutérochloroforme à 5 % et qu'un spectre RMN-1H est mesuré par analyse de résonance magnétique nucléaire conformément à la description,
le spectre RMN-1H du polymère à base de chloroprène mesuré dans un solvant deutérochloroforme présente un pic situé de 5,80 à 6,00 ppm ;
lorsqu'une surface du pic situé de 5,80 à 6,00 ppm est A et qu'une surface d'un pic situé de 4,05 à 6,10 ppm est B, A/B est de 1,00/100 à 1,13/100 ;
le spectre RMN-1 du polymère à base de chloroprène mesuré dans un solvant deutérochloroforme présente un pic situé de 5,40 à 5,60 ppm ; et
lorsqu'une surface du pic situé de 5,40 à 5,60 ppm est D et que la surface du pic situé de 4,05 à 6,10 ppm est B, D/B est de 97,20/100 ou moins.

2. Polymère à base de chloroprène selon la revendication 1, dans lequel
le spectre RMN-1 du polymère à base de chloroprène mesuré dans le solvant deutérochloroforme présente un pic situé de 4,15 à 4,20 ppm ; et
lorsqu'une surface du pic situé de 4,15 à 4,20 ppm est C et que la surface du pic situé de 4,05 à 6,10 ppm est B, C/B est de 0,10/100 ou plus.

3. Polymère à base de chloroprène selon la revendication 1 ou 2, qui est destiné à un corps moulé vulcanisé.

4. Latex de polymère à base de chloroprène comprenant le polymère à base de chloroprène selon l'une quelconque des revendications 1 à 3, dans lequel :
une quantité de substance de cation de métal alcalin par unité de masse dans le latex de polymère à base de chloroprène est de 0,05 à 0,10 mmol/g ; et
lorsque le latex de polymère à base de chloroprène est lyophilisé pour obtenir un contenu solide contenant le polymère à base de chloroprène, et qu'un contenu soluble dans un mélange azéotropique éthanol-toluène spécifié dans la norme JIS K 6229 est extrait par reflux du contenu solide pour obtenir un extrait, et que l'extrait obtenu est traité à l'acide avec de l'acide chlorhydrique, une quantité d'acide colophane dans le contenu solide mesurée par chromatographie en phase gazeuse est de 1,4 à 2,4 % en masse par rapport à 100 % en masse du polymère à base de chloroprène.

5. Procédé de production du latex de polymère à base de chloroprène selon la revendication 4, dans lequel
le procédé comprend une étape de polymérisation en émulsion,
dans l'étape de polymérisation en émulsion, un monomère incluant un monomère de chloroprène est émulsifié et polymérisé,
1,3 à 1,8 partie en masse de sel d'acide colophane est utilisée par rapport à 100 parties en masse d'un total de monomère de chloroprène et de monomère copolymérisable avec le chloroprène, et
0,1 à 0,3 partie en masse d'un total d'hydroxyde de sodium et d'hydroxyde de potassium est utilisée par rapport à 100 parties en masse de milieu aqueux.

6. Composition de composé comprenant le polymère à base de chloroprène selon l'une quelconque des revendications 1 à 3.

7. Corps moulé vulcanisé fabriqué à partir de la composition de composé selon la revendication 6.
